# EUROPÄISCHE PATENTSCHRIFT

(11) **EP 3 226 390 B1**
(45) Veröffentlichungstag und Bekanntmachung des Hinweises auf die Patenterteilung: **06.05.2020**
(21) Anmeldenummer: 17000405.5
(22) Anmeldetag: 13.03.2017
(51) Int. Cl.: H01F 41/082, H02K 15/08, H02K 15/085, H02K 15/09, H02K 15/095

(54) **VERFAHREN ZUM BEWICKELN EINES SPULENTRÄGERS**
METHOD FOR WINDING OF A COIL FORMER
PROCÉDÉ D'ENROULEMENT D'UN SUPPORT DE BOBINE

(30) Priorität: 02.04.2016 DE 102016004013
(43) Veröffentlichungstag der Anmeldung: 04.10.2017
(73) Patentinhaber: Audi AG, 85045 Ingolstadt (DE)
(72) Erfinder: Richnow, Jan, DE - 85049 Ingolstadt (DE); Schmidt, Jörg, DE - 85057 Ingolstadt (DE)
(74) Vertreter: Eickmeyer, Dietmar

(56) Entgegenhaltungen:
- EP-A2- 0 526 819
- EP-A2- 2 015 427
- DE-A1- 4 029 981

## Beschreibung

Die Erfindung betrifft ein Verfahren zum Bewickeln eines Spulenträgers, wobei durch Nadelwickeln mit einer Bewicklungseinrichtung mehrere Wicklungen eines Spulendrahtes in Nuten des Spulenträgers eingebracht werden, wobei der Spulenträger an einer Rotationseinrichtung der Bewicklungseinrichtung drehfest gehaltert wird, wobei der Spulendraht durch eine Drahtführdüse der Bewicklungseinrichtung zu dem Spulenträger geführt wird, wobei die Wicklungen in die Nuten eingebracht werden, indem wiederholt abwechselnd Rotationen der Rotationseinrichtung zur Anpassung eines Rotationswinkels des Spulenträgers um eine vorgegebene Rotationsachse und Verschiebungen der Drahtführdüse entlang eines Verschiebungspfades zur Führung des Spulendrahtes durch jeweils eine Nut durchgeführt werden. Daneben betrifft die Erfindung eine Bewicklungseinrichtung.

Bei der Herstellung von Statoren und Rotoren elektrischer Maschinen soll häufig Kupferdraht in Nuten eines Blechpakets eingebracht werden, um Spulen auf den Spulenträger, also den Stator oder den Rotor, zu wickeln. Hierzu existieren verschiedene Verfahren, beispielsweise die Einziehtechnik, bei der die Spulen vorgewickelt und dann in die Nuten eingezogen werden, oder das Nadelwickeln, bei dem der Draht aus einer Nadel, das heißt einer Drahtführdüse, kommend direkt in die Nut abgelegt wird. Der Vorteil des Nadelwickelns ist die Möglichkeit, durch ein präzises Ablegen des Drahtes Drahtüberkreuzungen zu vermeiden. Hierdurch kann der Füllgrad der Nut und somit die Leistung der Maschine erhöht werden.

Die Nutöffnung, durch die Nadel geführt wird, ist häufig sehr eng ausgelegt, so dass der Abstand zwischen Nadel und Spulenträger, der beispielsweise als Blechpaket gefertigt sein kann, sehr gering, beispielsweise nur einen Zehntel Millimeter, sein kann. Der Statorträger besteht häufig aus einer Vielzahl einzelner Lamellen, die beispielsweise aus Elektroblechband gestanzt und miteinander verklebt sein können. Derartige Lamellen werden genutzt, um Wirbelströme im Statorträger zu unterdrücken. Aufgrund von Toleranzen des Fertigungsverfahrens können jedoch einzelne Lamellen des Spulenträgers nach dem Fügen nicht exakt übereinanderliegen, womit die Nut, in der die Nadel beim Nadelwickeln geführt werden soll, nicht exakt gerade ist. Ist der Spulenträger in Nutrichtung relativ lang, kann dies dazu führen, dass die Drahtführdüse, die auch als Nadel bezeichnet wird, den Rand der Nut berührt oder an diesem hängenbleibt, was zu Beschädigungen der Drahtführdüse führen kann.

Der vorliegenden Erfindung liegt daher die Aufgabe zugrunde, ein Verfahren zum Aufbringen von Wicklungen auf einen Spulenträger durch Nadelwickeln anzugeben, bei dem die Beschädigungswahrscheinlichkeit für eine Drahtführdüse demgegenüber reduziert ist.

Die Aufgabe wird erfindungsgemäß durch ein Verfahren nach Anspruch 1, der eingangs genannten Art gelöst, wobei vor und/oder während der Verschiebung der Drahtführdüse entlang der jeweiligen Nut durch eine Erfassungseinrichtung die Geometrie der Nut betreffende Geometriedaten erfasst werden, wonach der Verschiebungspfad in Abhängigkeit der Geometriedaten ermittelt und/oder verändert wird und/oder wonach der Rotationswinkel durch Rotation der Rotationseinrichtung in Abhängigkeit der Geometriedaten geändert wird.

Erfindungsgemäß wird somit vorgeschlagen, die Geometrie einer Nut, durch die die Drahtführdüse geführt werden soll, zu erfassen und die Führung der Drahtführdüse durch Änderung des Verschiebungspfades bzw. des Rotationswinkels in Abhängigkeit der erfassten Geometrie anzupassen. Die eingangs erläuterten Abweichungen im Rahmen des Herstellungsprozesses des Spulenträgers können somit erfasst und bei der Bewicklung berücksichtigt werden. Die Geometriedaten können dabei unabhängig von der Bewicklung in einem vorbereiteten Schritt erfasst werden oder sie können im Rahmen des Bewicklungsprozesses selbst, vorzugsweise durch Sensoren der Bewicklungseinrichtung, erfasst werden. Durch das erfindungsgemäße Verfahren ist es möglich, das Risiko einer Beschädigung der Drahtführdüse im Rahmen der Bewicklung zu reduzieren und/oder größere Toleranzen des Herstellungsprozesses des Spulenträgers zu tolerieren, womit andere Eigenschaften optimiert und/oder die Herstellungskosten gesenkt werden können. Da die Geometrie der Nut berücksichtigt wird, ist es auch möglich, die Drahtführdüse näher an einem Rand der Nut zu führen, wodurch die Bewicklung des Spulenträgers, insbesondere bezüglich eines Füllgrades der einzelnen Nuten, weiter verbessert werden kann.

Die Bewicklung des Spulenträgers kann im Rahmen der Herstellung einer elektrischen Maschine erfolgen. Der Spulenträger kann beispielsweise ein Rotor- oder Statorkörper sein. Der Spulenträger kann insbesondere als Blechpaket hergestellt sein. Die Form des Spulenträgers kann im Wesentlichen zylindrisch sein, wobei axial oder radial verlaufende Nuten vorgesehen sein können, in die die Wicklungen eingebracht werden sollen. Alternativ wäre es beispielsweise möglich, statt eines zylindrischen Spulenträgers einen konischen Spulenträger zu nutzen.

Zur Verschiebung der Drahtführdüse können einer oder mehrere Aktoren genutzt werden. Es ist möglich, dass die Drahtführdüse im Wesentlichen entlang eines festen Verschiebungspfades verschiebbar ist, es ist jedoch auch möglich, zwei oder mehr Bewegungsfreiheitsgrade für die Drahtführdüse vorzusehen. Die Rotationseinrichtung kann beispielsweise ein Motor sein, der eine Tragescheibe antreibt, die rotationsfest mit dem Spulenträger verbunden ist. Zur Steuerung der Rotationseinrichtung und der Drahtführdüse bzw. des Aktors zur Bewegung der Drahtführdüse kann eine Steuereinrichtung genutzt werden. Im Rahmen der Führung der Drahtführdüse entlang des Verschiebungspfades können feste Rotationswinkel und ein fester Verschiebepfad für die Drahtführdüse berechnet werden. Alternativ ist es möglich, den Rotationswinkel und/oder den Verschiebungspfad ausgehend von einem Ausgangswinkel bzw. -pfad durch eine Regelung zu bestimmen, bei der beispielsweise der Abstand der Drahtführdüse zu einem Rand oder beiden Rändern einer Nut als Eingangsgröße eingehen kann.

Die Erfassungseinrichtung kann, beispielsweise in Form eines optischen oder taktilen Sensors, in die Bewicklungseinrichtung integriert sein und die Geometriedaten direkt an die Steuereinrichtung bereitstellen. Alternativ wäre es möglich, eine Erfassungseinrichtung zu nutzen, die separat von der Bewicklungseinrichtung ausgebildet ist, beispielsweise einen 3D-Scanner oder ein Koordinatenmessgerät. Die Bereitstellung der Geometriedaten an die Bewicklungseinrichtung bzw. deren Steuereinrichtung kann beispielsweise über entfernbare Datenträger oder ein Netzwerk erfolgen.

Die Geometriedaten können derart erfasst werden, dass während des Verschiebens der Drahtführdüse durch die jeweilige Nut wiederholt Teilgeometriedaten erfasst werden, die jeweils einen Abschnitt der Nut betreffen, den die Drahtführdüse zukünftig durchqueren wird. Dies kann beispielsweise dadurch erreicht werden, dass die Erfassungseinrichtung bzw. ein Erfassungsabschnitt der Erfassungseinrichtung, beispielsweise eine Optik, die sichtbares Licht in eine Glasfaser einkoppelt und zu einem optischen Sensor führt, derart geführt wird, dass sie der Drahtführdüse vorauseilt. Dies ist im einfachsten Fall durch eine starre Verbindung zwischen der Drahtführdüse oder einem Träger der Drahtführdüse und der Erfassungseinrichtung bzw. dem Erfassungsabschnitt möglich.

Es ist möglich, dass die Geometriedaten der jeweiligen Nut erfasst werden oder ein Teil der Geometriedaten der jeweiligen Nut erfasst wird, während die Drahtführdüse durch eine weitere Nut des Spulenträgers geführt wird und/oder während der Rotationswinkel des Spulenträgers durch eine Rotation der Rotationseinrichtung angepasst wird. Beispielsweise kann die Erfassungseinrichtung bzw. der Erfassungsabschnitt außerhalb der Nut geführt sein, so dass eine Erfassung der Geometriedaten bzw. eines Teils der Geometriedaten bereits während einer Rotation der Rotationseinrichtung möglich ist.

Die Erfassungseinrichtung oder ein Erfassungsabschnitt der Erfassungseinrichtung kann während der Verschiebung der Drahtführdüse entlang zumindest eines Abschnitts des Verschiebungspfades parallel zu der Drahtführdüse geführt werden, um die Geometriedaten der Nut oder einer weiteren Nut zu erfassen. Um Geometriedaten der Nut zu erfassen, durch die die Drahtführdüse geführt wird, kann die Erfassungseinrichtung oder der Erfassungsabschnitt so geführt werden, dass er der Drahtführdüse vorauseilt. Insbesondere bei optischen Erfassungseinrichtungen bzw. Erfassungsabschnitten kann es vorteilhaft sein, die Erfassungseinrichtung oder den Erfassungsabschnitt außerhalb der Nut zu führen, so dass die Erfassungseinrichtung bzw. der Erfassungsabschnitt nicht notwendigerweise entlang des Verschiebungspfades selbst sondern parallel dazu verschoben werden kann. Um Geometriedaten einer weiteren Nut zu erfassen, kann die Erfassungseinrichtung oder der Erfassungsabschnitt derart gegenüber der Drahtführdüse parallel versetzt geführt werden, dass sie bzw. er im Wesentlichen oberhalb einer weiteren Nut geführt wird.

Die Erfassungseinrichtung oder der Erfassungsabschnitt können ortsfest bezüglich der Drahtführdüse gehaltert werden. Dies ermöglicht eine besonders einfache Führung der Erfassungseinrichtung bzw. des Erfassungsabschnitts. Die Halterung kann an der Drahtführdüse selbst erfolgen oder an einem Trageelement, das die Drahtführdüse trägt.

In einer alternativen Ausführungsform ist es möglich, dass die Geometriedaten erfasst werden, bevor der Spulenträger an der Rotationseinrichtung gehaltert wird. Der Spulenträger kann somit nach der Produktion aber vor der Anordnung an der Bewicklungseinrichtung vermessen werden, womit keine zusätzliche Sensorik der Bewicklungseinrichtung erforderlich ist. Hierdurch ist es möglich, das erfindungsgemäße Verfahren besonders leicht auf bestehende Bewicklungseinrichtungen zu übertragen, da ausschließlich die Art der Steuerung der Drahtführdüse bzw. der Rotationseinrichtung angepasst werden muss, was potentiell durch ein reines Softwareupdate möglich ist.

Vor und/oder während der Verschiebung der Drahtführdüse entlang der jeweiligen Nut können durch die Erfassungseinrichtung die Lage wenigstens eines vorangehend in die Nut eingebrachten Spulendraht betreffende Lagedaten erfasst werden, wonach der Verschiebungspfad in Abhängigkeit der Lagedaten ermittelt und/oder verändert wird und/oder wonach der Rotationswinkel durch Rotation der Rotationseinrichtung in Abhängigkeit der Lagedaten geändert wird. Dies ermöglicht es beim Einlegen der einzelnen Bahnen des Spulendrahtes, diese unter Berücksichtigung der bereits vorhandenen Bahnen zu positionieren und somit die Fülldichte zu erhöhen.

Als Erfassungseinrichtung oder als Teil der Erfassungseinrichtung kann ein optischer und/oder ein taktiler Sensor verwendet werden. Als optischer Sensor kann beispielsweise eine Kamera genutzt werden, die vorzugsweise Licht im sichtbaren Bereich und/oder Infrarotlicht erfasst. Es ist auch möglich, dass eine Stereo- oder Time-of-Flight-Kamera verwendet wird, um dreidimensionale Bilddaten zu erhalten. Bei entsprechender Wahl der Aufnahmegeometrie ist es im erfindungsgemäßem Verfahren jedoch in der Regel ausreichend, eine zweidimensionale Bildgebung oder gar eine eindimensionale Bildgebung zu nutzen, da im Wesentlichen die Ränder der Nut erfasst werden sollen, die leicht als Kanten im Bild erkannt werden können. Ein entsprechender optischer Sensor kann direkt an der Drahtführdüse bzw. einem parallel dazu geführten Element, beispielsweise einem Träger der Drahtführdüse, angeordnet sein. Alternativ ist es möglich, nur einen Erfassungsabschnitt, beispielsweise eine Optik, die zu erfassendes Licht in einen Lichtleiter einkoppelt, an der Drahtführdüse oder an dem parallel dazu geführten Element anzuordnen. Das derart erfasste Licht kann über den Lichtleiter zu einem Sensor geführt werden, der im Wesentlichen beliebig angeordnet werden kann, um die Bilddaten zu erfassen.

Bei dem taktilen Sensor kann es sich um wenigstens einen Tastkopf handeln, der durch die Nut geführt wird, um insbesondere den Rand auf einer oder auf beiden Seiten der Nut zu erfassen. Hierzu können beispielsweise durch den Nutrand auf einen Kraftaufnehmer wirkende Kräfte gemessen werden. Ein Tastkopf kann beispielsweise mit einem festen Anpressdruck entlang dem Rand einer Nut geführt werden oder er kann zwischen den beiden Rändern der Nut hin- und herschwingen, um beide Ränder mit einem Kraftaufnehmer zu erfassen.

Neben dem erfindungsgemäßen Verfahren betrifft die Erfindung eine Bewicklungseinrichtung zum Bewickeln eines Spulenträgers, mit einer Rotationseinrichtung zur Rotation des Spulenträgers um eine vorgegebene Rotationsachse, einer Drahtführdüse zur Führung eines Spulendrahts zu dem Spulenträger, wenigstens einem Aktor zur Bewegung der Drahtführdüse und einer Steuereinrichtung zur Steuerung des Aktors und der Rotationseinrichtung, wobei die Steuereinrichtung dazu eingerichtet ist, die Rotationseinrichtung und den Aktor zur Bewicklung des Spulenträgers gemäß dem erfindungsgemäßen Verfahren anzusteuern. Die Steuerung kann in Abhängigkeit von durch die Bewicklungseinrichtung oder durch eine weitere Einrichtung erfassten, eine jeweilige Nut beschreibenden Geometriedaten erfolgen. Die erfindungsgemäße Bewicklungseinrichtung ist mit den Merkmalen, die zum erfindungsgemäßen Verfahren erläutert wurden, mit den entsprechenden Vorteilen weiterbildbar. Auch Merkmale, die zur erfindungsgemäßen Bewicklungseinrichtung erläutert werden, sind mit den entsprechenden Vorteilen auf das erfindungsgemäße Verfahren übertragbar.

Die Bewicklungseinrichtung umfasst vorzugsweise eine Erfassungseinrichtung zur Erfassung der Geometriedaten und/oder der Lagedaten. Die Erfassungseinrichtung oder eine Erfassungskomponente der Erfassungseinrichtung kann ortsfest bezüglich der Drahtführdüse angeordnet sein. Beispielsweise können die Drahtführdüse und die Erfassungseinrichtung bzw. die Erfassungskomponente durch eine gemeinsame Trageeinrichtung getragen werden, die durch den Aktor bewegbar ist oder die Erfassungseinrichtung oder die Erfassungskomponente kann direkt an der Drahtführdüse befestigt sein. Als die Erfassungseinrichtung oder ein Teil der Erfassungseinrichtung kann, wie oben erläutert, ein optischer und/oder ein taktiler Sensor verwendet werden.

Weitere Vorteile und Einzelheiten der Erfindung zeigen die folgenden Ausführungsbeispiele sowie die zugehörigen Zeichnungen. Dabei zeigen schematisch:
- Fig. 1: ein Ausführungsbeispiel einer erfindungsgemäßen Bewicklungseinrichtung,
- Fig. 2: ein Beispiel für die Führung der Drahtführdüse unter Vernachlässigung der Geometriedaten,
- Fig. 3: die Anpassung des Pfades der Drahtführdüse in einem Ausführungsbeispiel des erfindungsgemäßen Verfahrens, und
- Fig. 4 und 5: Ablaufdiagramme zweier Ausführungsbeispiele des erfindungsgemäßen Verfahrens.

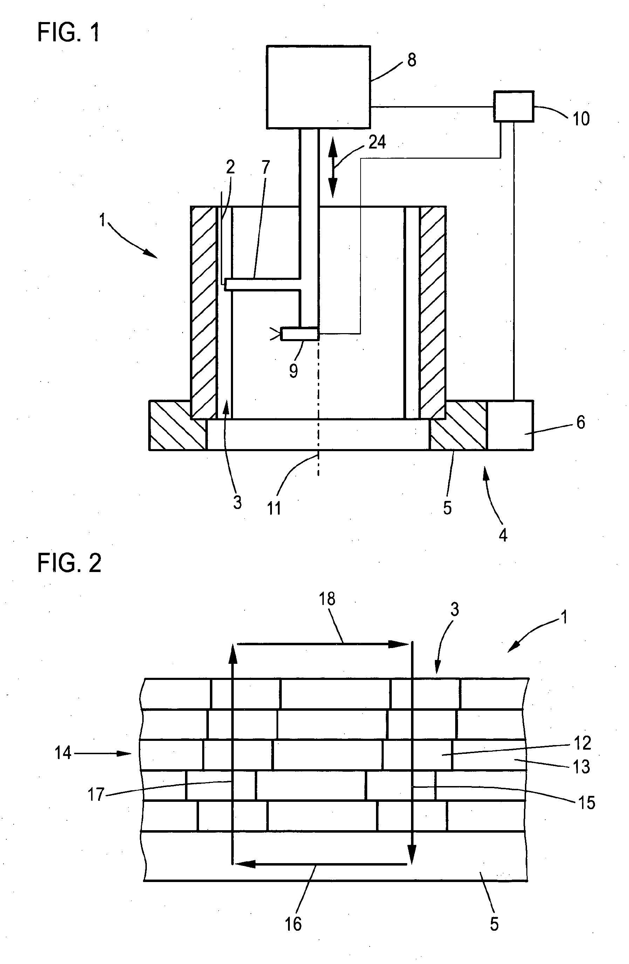

Fig. 1 zeigt ein Ausführungsbeispiel einer Bewicklungseinrichtung zum Bewickeln eines Spulenträgers 1. Die Bewicklungseinrichtung weist eine Rotationseinrichtung 4 auf, die eine Tragescheibe 5 umfasst, an der der Spulenträger 1 drehfest anordenbar ist, und einen Motor 6, um die Tragescheibe 5 und den daran befestigten Spulenträger 1 um eine vorgegebene Rotationsachse 11 zu rotieren. Daneben umfasst die Bewicklungseinrichtung eine Drahtführdüse 7, durch die der Spulendraht 2 zum Spulenträger 1 führbar ist. Die Drahtführdüse 7 ist durch den Aktor 8 in Richtung des Pfeils 24 führbar, um die Drahtführdüse 7 durch eine Nut 3 des Spulenträgers 1 zu führen und den Spulendraht 2 dort abzulegen. Aus Übersichtlichkeitsgründen sind weitere mögliche Bewegungsfreiheitsgrade der Drahtführdüse 7 nicht gezeigt, durch die beispielsweise eine bessere Halterung des Spulendrahts 2 an Halteeinrichtungen ermöglicht werden kann, die an den Stirnflächen des Spulenträgers 1 angeordnet sein können.

Um Wicklungen des Spulendrahts 2 auf den Spulenträger 1 aufzubringen, werden wiederholt Rotationen der Rotationseinrichtung 4 zum Anpassen eines Rotationswinkels des Spulenträgers und Verschiebungen der Drahtführdüse 7 zur Führung des Spulendrahtes durch eine jeweilige Nut 3 durchgeführt. Dies ist schematisch in Fig. 2 dargestellt, die eine Detailansicht eines Schnitts durch den Spulenträger 1 senkrecht zu der in Fig. 1 gezeigten Bildebene zeigt. Im Gegensatz zur Fig. 1 zeigt Fig. 2 auch die Bildung des Spulenträgers 1 aus mehreren Lamellen 14, beispielsweise aus mehreren Schichten eines Elektroblechs. Aus Übersichtlichkeitsgründen ist ein Aufbau aus nur fünf Lamellen 14 dargestellt. In realen Spulenträgern 1 sind die Lamellen typischerweise nur wenige Millimeter dick, so dass der Spulenträger 1 aus einer Vielzahl von Lamellen 14 gebildet ist.

Die einzelnen Lamellen 14 weisen in Umfangsrichtung des Spulenträgers 1 abwechselnd Ausnehmungen 12 und Vorsprünge 13 auf. Werden die Lamellen 14 im Wesentlichen deckungsgleich gestapelt, so bilden die Ausnehmungen 12 gemeinsam mehreren Nuten 3 und die Vorsprünge 13 die zwischen den Nuten 3 liegenden Zähne des Spulenträgers 1. In einem idealen Spulenträger 1 sind die Lamellen 14 deckungsgleich, so dass Nuten 3 mit geraden Nutwänden gebildet werden. In Fig. 2 ist eine geringfügige Verschiebung bzw. Verdrehung der einzelnen Lamellen 14 zueinander dargestellt, die, wie später noch erläutert wird, durch die in Fig. 1 gezeigte Bewicklungseinrichtung beim Aufbringen der Wicklungen berücksichtigt wird.

Beim Nadelwickeln ist es üblich, die Spitze der Drahtführdüse 7, an der der Spulendraht 2 austritt, in die Umfangsrichtung des Spulenträgers 1 zu führen, indem der Spulenträger 1 durch die Rotationseinrichtung 4 um die Achse 11 rotiert wird. Die Führung der Drahtführdüse 7 entlang der in Fig. 2 gezeigten Pfeile 16 und 18 erfolgt somit durch eine Rotation der Tragescheibe 5 durch den Motor 6. Die Ansteuerung des Motors 6 erfolgt durch die Steuereinrichtung 10. Das Führen des Spulendrahts entlang der Nuten 3, das heißt die Verschiebung entlang der Pfeile 15 und 17 erfolgt durch den Aktor 8, der ebenfalls durch die Steuereinrichtung 10 gesteuert wird. Wird die Drahtführdüse nach einem Befestigen des Spulendrahtes mehrfach entlang der Pfeile 15, 16, 17, 18 geführt, werden somit mehrere Wicklungen auf dem Spulenträger 1 aufgebracht. Im gezeigten Beispiel verläuft die Wicklung um einen einzigen Zahn des Spulenträgers 1. Diese Darstellung erfolgt aus Übersichtlichkeitsgründen. Reale Wicklungen werden typischerweise um einen Bereich geführt, der mehrere Nuten und Zähne umfasst.

Im Stand der Technik erfolgt die Führung der Drahtführdüse im Wesentlichen wie in Fig. 2 dargestellt. Wie in Fig. 2 zu erkennen ist, variiert aufgrund der nicht vollständigen Deckungsgleichheit der Lamellen 14 hierbei während der Führung der Drahtführdüse 7 durch die Nut 3 der Abstand der Drahtführdüse 7 zu den Wänden der jeweiligen Nut 3. Insbesondere bei Spulenträgern 1 mit langen Nuten ist es möglich, dass die Drahtführdüse 7 aufgrund der in Fig. 2 gezeigten unebenen Wände der Nuten 3 diese Wände berührt oder an Unebenheiten dieser Wände hängenbleibt. Dies kann zu einer Beschädigung der Drahtführdüse führen. Um dies zu vermeiden, müssten relativ breite Nuten 3 genutzt werden und/oder die Drahtführdüse 7 muss in relativ großem Abstand zu den Wänden der Nuten 3 geführt werden. Dies kann sich negativ auf den erreichbaren Füllgrad der Nuten 3 und somit auf die Effizienz einer hergestellten Elektromaschine auswirken.

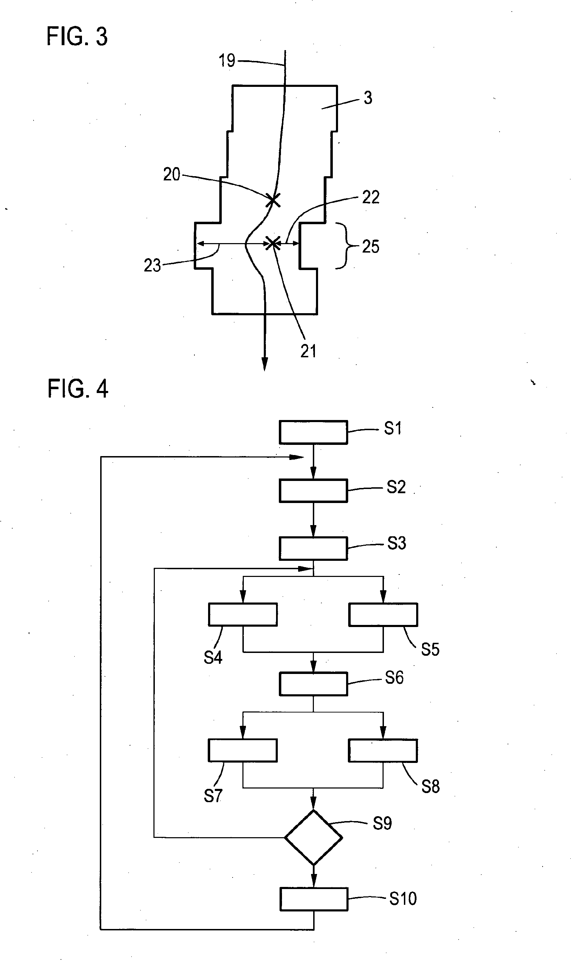

Um ein demgegenüber verbessertes Wickelverfahren umzusetzen, umfasst die in Fig. 1 gezeigte Bewicklungseinrichtung zusätzlich eine Erfassungseinrichtung 9, die während der Verschiebung der Drahtführdüse 7 entlang einer jeweiligen Nut 3 die Geometrie der Nut 3 betreffende Geometriedaten erfasst. Diese Geometriedaten werden an die Steuereinrichtung 10 bereitgestellt, die die Rotationseinrichtung 4 und/oder den Aktor 8 in Abhängigkeit dieser Geometriedaten steuert. Ein resultierender Verschiebungspfad 19 in einem bezüglich des Spulenträgers 1 festen Koordinatensystem ist beispielhaft in Fig. 3 dargestellt. Der Verschiebungspfad 19 folgt im Wesentlichen der Kontur der Wände der Nut 3. Dies wird wie folgt erreicht:
Durch die Erfassungseinrichtung 9 werden in jeder Position 20 der Drahtführdüse Teilgeometriedaten erfasst, die jeweils einen Abschnitt 25 der Nut 3 betreffen, den die Drahtführdüse 7 zukünftig durchqueren wird. Dies wird erreicht, indem die Erfassungseinrichtung 9, wie in Fig. 1 dargestellt ist, gegenüber der Drahtführdüse 7 geringfügig versetzt angeordnet ist. Sie befindet sich somit zu dem Zeitpunkt, zu dem sich die Drahtführdüse an der Position 20 befindet, an der Position 21 und erfasst somit den Abschnitt 25 der Nut. Die Erfassungseinrichtung 9 ist beispielsweise als eine Kamera ausgebildet und erfasst Bilddaten des Abschnitts 25 der Nut 3. Aus diesen Bilddaten werden durch die Steuereinrichtung 10 die Abstände 22, 23 zu den Wänden der Nut 3 ermittelt. Hierzu kann beispielsweise eine Kantendetektion in den Bilddaten durchgeführt werden, wobei aufgrund der festen Aufnahmegeometrie, wie sie in Fig. 1 gezeigt ist, aus der Position der jeweiligen Kante direkt ein Abstand 22, 23 ermittelt werden kann. Zur Anpassung des Verschiebungspfades 19 kann die Steuereinrichtung 10 eine Regelung implementieren, die versucht, die Differenz der Abstände 22, 23 auf Null oder auf einen anderen vorgegebenen Wert zu regeln, wobei die Stellgröße ein Rotationswinkel der Rotationseinrichtung 4 ist. Alternativ oder ergänzend könnte die Stellgröße auch Aktoren, beispielsweise den Aktor 8, steuern, durch die die Drahtführdüse 7 bewegbar ist.

Fig. 4 zeigt ein Ablaufdiagramm eines Ausführungsbeispiels eines Verfahrens zum Bewickeln eines Spulenträgers 1. Zusätzlich zur Berücksichtigung der Geometrie der einzelnen Nuten 3 wird in diesem Verfahren auch eine Lage von bereits eingebrachten Spulenwicklungen berücksichtigt, um die Fülldichte der einzelnen Nuten 3 und somit auch den Wirkungsgrad resultierender elektrischer Maschinen verbessern zu können. In Schritt S1 wird zunächst der Spulenträger 1 an einer Rotationseinrichtung 4 einer Bewicklungseinrichtung drehfest angebracht. Zudem wird der Spulendraht 2 an wenigstens einem Punkt des Spulenträgers 1 oder an einer separaten Halteeinrichtung befestigt.

In Schritt S2 wird anschließend durch eine Steuereinrichtung 10 die Rotationseinrichtung 4 derart angesteuert, dass ein Rotationswinkel eingestellt wird, bei dem die Drahtführdüse 7 im Wesentlichen in einer geraden Verlängerung einer Nut 3 des Spulenträgers 1 liegt. In Schritt S3 wird durch eine entsprechende Ansteuerung des Aktors 8 durch die Steuereinrichtung 10 die Drahtführdüse 7 in Richtung der Nut 3 geführt, dringt jedoch noch nicht in diese ein. Die Erfassungseinrichtung 9 kann daher in Schritt S4 bereits einen ersten Abschnitt 25 der Nut 3 erfassen, den die Drahtführdüse 7 zukünftig durchqueren wird, und die diesen Abschnitt 25 beschreibenden Teilgeometriedaten an die Steuereinrichtung 10 bereitstellen. Zugleich wird durch eine Merkmalserkennung in den Bilddaten in Schritt S5 erkannt, ob sich bereits ein Spulendraht in der Nut 3 befindet. Ist dies der Fall, werden eine Lage dieses Spulendrahts beschreibende Lagedaten ermittelt.

In Schritt S6 wird ein optimaler Verschiebungspfad 19 unter Berücksichtigung der Teilgeometriedaten und der Lagedaten ermittelt. Dieser wird so gewählt, dass eine Kollision der Drahtführdüse 7 mit einer Wand der Nut 3 zuverlässig vermieden wird und dass der Spulendraht 2 derart in die Nut 3 gelegt wird, dass unter Berücksichtigung der bereits vorhandenen Drahtlagen eine optimale Fülldichte erreicht wird.

Zur Führung der Drahtführdüse 7 entlang des entsprechenden Verschiebungspfades 19 werden einerseits in Schritt S7 Steuergrößen für den Aktor 8, der die Drahtführdüse 7 verschiebt, und andererseits in Schritt S8 Rotationswinkel für die Rotationseinrichtung 4 bestimmt, um eine Lage der Drahtführdüse in Umfangsrichtung des Spulenträgers 1 schnell und effizient anpassen zu können. Diese Steuergrößen werden durch die Steuereinrichtung 10 an die Aktoren 8 und die Rotationseinrichtung 4 ausgegeben.

In Schritt S9 wird überprüft, ob das Ende der Nut 3 bereits erreicht ist. Hierzu können feste Grenzwerte für eine Verschiebung der Drahtführdüse 7 in Richtung des Pfeils 24 vorgegeben werden, es ist jedoch auch möglich, dass ein Erreichen des Endes der Nut durch Auswertung der Bilddaten der Erfassungseinrichtung 9 ermittelt wird. Wurde das Ende der Nut 3 noch nicht erreicht, so wird das Verfahren ab Schritt S4 bzw. S5 wiederholt. Wurde das Ende der Nut jedoch erreicht, so wird durch die Steuereinrichtung 10 in Schritt S10 die Rotationseinrichtung 4 angesteuert, um eine neue Nut auszuwählen, das heißt die Drahtführdüse 7 an dieser zu platzieren, wonach die Drahtführdüse 7 in dieser Nut 3 aufwärts geführt wird. Für die Aufwärtsführung kann eine weitere nicht in Fig. 1 gezeigte Erfassungseinrichtung vorgesehen sein. In diesem Fall kann auch während der Aufwärtsbewegung der Verschiebungspfad 19 angepasst werden und das Verfahren somit ab Schritt S2 wiederholt werden.

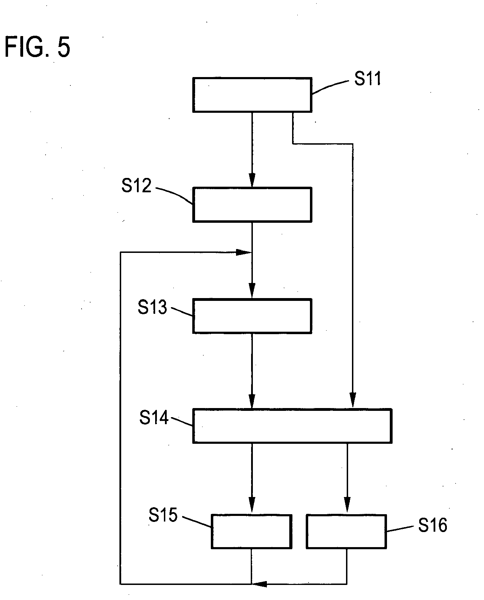

In einigen Fällen kann es gewünscht sein, eine Bewicklungseinrichtung zu nutzen, die keine eigene Erfassungseinrichtung aufweist. Um dennoch eine Anpassung des Verschiebungspfades 19 zu ermöglichen, die die Form der Nut 3 berücksichtigt, kann beispielsweise das nun mit Bezug auf Fig. 5 erläuterte Verfahren genutzt werden. Hierbei wird zunächst im Schritt S11, nach der Herstellung des Spulenträgers 1, jedoch bevor dieser an der Bewicklungseinrichtung angeordnet wird, eine die jeweiligen Nuten 3 beschreibende Geometrieinformation durch eine separat von der Bewicklungseinrichtung ausgebildete Erfassungseinrichtung erfasst. Bei der Erfassungseinrichtung kann es sich beispielsweise um einen 3D-Scanner handeln, es können mehrere Bildaufnahmen des Spulenträgers 1 angefertigt werden und durch eine Bildverarbeitung kann die Geometrie des Spulenträgers 1 und somit auch der Nuten 3 bestimmt werden oder es kann ein Koordinatenmessgerät genutzt werden, das den Spulenträger 1 bzw. die Nuten 3 durch mechanische Tastköpfe abtastet.

In Schritt S12 wird der Spulenträger 1 anschießend drehfest an der Rotationseinrichtung der Bewicklungseinrichtung angeordnet. In Schritt S13 wird eine Nut 3, an der mit dem Wickeln begonnen werden soll, angefahren, wie bereits zu Schritt S2 in Fig. 4 erläutert.

Um die vorangehend erfassten Geometriedaten im Rahmen der Bewicklung nutzen zu können, werden diese zu der Steuereinrichtung 10 der Bewicklungseinrichtung übertragen. Dies kann beispielsweise über ein Netzwerk, insbesondere ein Funknetzwerk, oder durch Nutzung eines oder mehrerer Datenträger erfolgen. In Schritt S14 wird anschließend, wie bereits zu Schritt S6 erläutert, ein Verschiebungspfad 19 berechnet und in den Schritten S15 und S16 werden der Aktor 8 bzw. die Rotationseinrichtung 4 angesteuert, um diesen Verschiebungspfad 19 umzusetzen. Anschließend wird das Verfahren ab Schritt S13 wiederholt.

## Patentansprüche

1. Verfahren zum Bewickeln eines Spulenträgers (1), wobei durch Nadelwickeln mit einer Bewicklungseinrichtung mehrere Wicklungen eines Spulendrahtes (2) in Nuten (3) des Spulenträgers (1) eingebracht werden, wobei der Spulenträger (1) an einer Rotationseinrichtung (4) der Bewicklungseinrichtung drehfest gehaltert wird, wobei der Spulendraht (2) durch eine Drahtführdüse (7) der Bewicklungseinrichtung zu dem Spulenträger (1) geführt wird, wobei die Wicklungen in die Nuten (3) eingebracht werden, indem wiederholt abwechselnd Rotationen der Rotationseinrichtung (4) zur Anpassung eines Rotationswinkels des Spulenträgers um eine vorgegebene Rotationsachse (11) und Verschiebungen der Drahtführdüse (7) entlang eines Verschiebungspfades (19) zur Führung des Spulendrahtes (2) durch jeweils eine Nut (3) durchgeführt werden, wobei vor und/oder während der Verschiebung der Drahtführdüse (7) entlang der jeweiligen Nut (3) durch eine Erfassungseinrichtung (9) die Geometrie der Nut (3) betreffende Geometriedaten erfasst werden,
**dadurch gekennzeichnet,**
**dass** der Verschiebungspfad (19) in Abhängigkeit der Geometriedaten durch eine Regelung bestimmt wird und/oder dass der Rotationswinkel durch eine Regelung der Rotation der Rotationseinrichtung (4) in Abhängigkeit der Geometriedaten bestimmt wird, wobei jeweils der Abstand der Drahtführdüse zu einer Wand oder beiden Wänden der Nut als Eingangsgröße in die Regelung eingeht.

2. Verfahren nach Anspruch 1,
**dadurch gekennzeichnet,**
**dass** die Geometriedaten derart erfasst werden, dass während des Verschiebens der Drahtführdüse (7) durch die jeweilige Nut (3) wiederholt Teilgeometriedaten erfasst werden, die jeweils einen Abschnitt (25) der Nut (3) betreffen, den die Drahtführdüse (7) zukünftig durchqueren wird.

3. Verfahren nach Anspruch 1 oder 2,
**dadurch gekennzeichnet,**
**dass** die Geometriedaten der jeweiligen Nut (3) erfasst werden oder ein Teil der Geometriedaten der jeweiligen Nut (3) erfasst wird, während die Drahtführdüse (7) durch eine weitere Nut des Spulenträgers (1) geführt wird und/oder während der Rotationswinkel des Spulenträgers (1) durch eine Rotation der Rotationseinrichtung (4) angepasst wird.

4. Verfahren nach einem der vorangehenden Ansprüche,
**dadurch gekennzeichnet,**
**dass** die Erfassungseinrichtung (9) oder ein Erfassungsabschnitt der Erfassungseinrichtung (9) während der Verschiebung der Drahtführdüse (7) entlang zumindest eines Abschnitts des Verschiebungspfades (19) parallel zu der Drahtführdüse (7) geführt wird, um die Geometriedaten der Nut (3) oder einer weiteren Nut zu erfassen.

5. Verfahren nach Anspruch 4,
**dadurch gekennzeichnet,**
**dass** die Erfassungseinrichtung (7) oder der Erfassungsabschnitt ortsfest bezüglich der Drahtführdüse (7) gehaltert wird.

6. Verfahren nach Anspruch 1,
**dadurch gekennzeichnet,**
**dass** die Geometriedaten erfasst werden, bevor der Spulenträger (1) an der Rotationseinrichtung (4) gehaltert wird.

7. Verfahren nach einem der vorangehenden Ansprüche,
**dadurch gekennzeichnet,**
**dass** vor und/oder während der Verschiebung der Drahtführdüse (7) entlang der jeweiligen Nut (3) durch die Erfassungseinrichtung (9) die Lage wenigstens eines vorangehend in die Nut (3) eingebrachten Spulendrahts (2) betreffende Lagedaten erfasst werden, wonach der Verschiebungspfad (19) in Abhängigkeit der Lagedaten ermittelt und/oder verändert wird und/oder wonach der Rotationswinkel durch Rotation der Rotationseinrichtung (4) in Abhängigkeit der Lagedaten geändert wird.

8. Verfahren nach einem der vorangehenden Ansprüche,
**dadurch gekennzeichnet,**
**dass** als Erfassungseinrichtung (9) oder als Teil der Erfassungseinrichtung (9) ein optischer und/oder ein taktiler Sensor verwendet wird.

9. Bewicklungseinrichtung zum Bewickeln eines Spulenträgers (1) mit einer Rotationseinrichtung (4) zur Rotation des Spulenträgers (1) um eine vorgegebene Rotationsachse (11), einer Drahtführdüse (7) zur Führung eines Spulendrahts zu dem Spulenträger, wenigstens einem Aktor (8) zur Bewegung der Drahtführdüse (7) und einer Steuereinrichtung (10) zur Steuerung des Aktors (8) und der Rotationseinrichtung (4),
**dadurch gekennzeichnet,**
**dass** die Steuereinrichtung (10) dazu eingerichtet ist, die Rotationseinrichtung (4) und den Aktor (8) zur Bewicklung des Spulenträgers (1) nach einem Verfahren nach einem der vorangehenden Ansprüche anzusteuern.

10. Bewicklungseinrichtung nach Anspruch 9,
**dadurch gekennzeichnet,**
**dass** sie eine Erfassungseinrichtung (9) zur Erfassung der Geometriedaten und/oder der Lagedaten umfasst.

11. Bewicklungseinrichtung nach Anspruch 10,
**dadurch gekennzeichnet,**
**dass** die Erfassungseinrichtung (9) oder eine Erfassungskomponente der Erfassungseinrichtung (9) ortsfest bezüglich der Drahtführdüse (7) angeordnet ist.

12. Bewicklungseinrichtung nach Anspruch 10 oder 11,
**dadurch gekennzeichnet,**
**dass** als Erfassungseinrichtung (9) oder als Teil der Erfassungseinrichtung (9) ein optischer und/oder ein taktiler Sensor verwendet wird.

## Claims

1. Method for winding a coil former (1), wherein a plurality of windings of a coil wire (2) are introduced into grooves (3) of the coil former (1) by needle winding with a winding device, wherein the coil former (1) is held in a rotationally fixed manner on a rotation device (4) of the winding device, wherein the coil wire (2) is guided by a wire guiding nozzle (7) of the winding device to the coil former (1), wherein the windings are introduced into the grooves (3), by carrying out repeatedly alternating rotations of the rotation device (4) to adjust a rotation angle of the coil former about a predetermined angle of rotation (11) and displacements of the wire guiding nozzle (7) along a displacement path (19) to guide the coil wire (2) through in each case one groove (3), wherein before and/or during the displacement of the wire guiding nozzle (7) along the respective groove (3) the geometry data related to the geometry of the groove (3) are detected by a detection device (9),
**characterised in that**
the displacement path (19) is determined depending on the geometry data by a control and/or that the angle of rotation is determined by a control of the rotation of the rotation device (4) depending on the geometry data, wherein in each case the distance of the wire guiding nozzle from a wall or both walls of the groove is entered into the control as an input variable.

2. Method according to claim 1,
**characterised in that**
the geometry data are detected in such a manner that during the displacement of the wire guiding nozzle (7) through the respective groove (3) partial geometry data are repeatedly detected, which in each case relate to a section (25) of the groove (3), through which the wire guiding nozzle (7) will cross in the future.

3. Method according to claim 1 or 2,
**characterised in that**
the geometry data of the respective groove (3) are detected or a part of the geometry data of the respective groove (3) is detected, while the wire guiding nozzle (7) is guided through a further groove of the coil former (1) and/or while the angle of rotation of the coil former (1) is adjusted by means of a rotation of the rotation device (4).

4. Method according to any one of the preceding claims,
**characterised in that**
the detection device (9) or a detection section of the detection device (9) is guided during the displacement of the wire guiding nozzle (7) along at least one section of the displacement path (19) parallel to the wire guiding nozzle (7), in order to detect the geometry data of the groove (3) or of a further groove.

5. Method according to claim 4,
**characterised in that**
the detection device (7) or the detection section is held in a stationary manner with respect to the wire guiding nozzle (7).

6. Method according to claim 1,
**characterised in that**
the geometry data are detected, before the coil former (1) is held on the rotation device (4).

7. Method according to any one of the preceding claims,
**characterised in that**
before and/or during the displacement of the wire guiding nozzle (7) along the respective groove (3) position data related to the position at least of one coil wire (2) introduced previously into the groove (3) are detected by the detection device (9), then the displacement path (19) is determined and/or changed depending on the position data and/or then the angle of rotation is changed by rotation of the rotation device (4) depending on the position data.

8. Method according to any one of the preceding claims,
**characterised in that**
an optical and/or a tactile sensor is used as detection device (9) or as part of the detection device (9).

9. Winding device for winding a coil former (1) with a rotation device (4) for rotating the coil former (1) about a predetermined axis of rotation (11), a wire guiding nozzle (7) for guiding a coil wire to the coil former, at least one actuator (8) for moving the wire guiding nozzle (7) and a control device (10) for controlling the actuator (8) and the rotation device (4),
**characterised in that**
the control device (10) is configured to control the rotation device (4) and the actuator (8) for winding the coil former (1) according to a method according to any one of the preceding claims.

10. Winding device according to claim 9,
**characterised in that**
it comprises a detection device (9) for detecting the geometry data and/or the position data.

11. Winding device according to claim 10,
**characterised in that**
the detection device (9) or a detection component of the detection device (9) is arranged in a stationary manner with respect to the wire guiding nozzle (7).

12. Winding device according to claim 10 or 11,
**characterised in that**
an optical and/or a tactile sensor is used as detection device (9) or as part of the detection device (9).

## Revendications

1. Procédé d'enroulement d'un support de bobine (1), dans lequel plusieurs bobines d'un fil à bobiner (2) sont introduites dans des rainures (3) du support de bobine (1) par enroulement par aiguille avec un dispositif d'enroulement, dans lequel le support de bobine (1) est retenu de manière solidaire en rotation sur un dispositif de rotation (4) du dispositif d'enroulement, dans lequel le fil à bobiner (2) est guidé à travers une buse de guidage de fil (7) du dispositif d'enroulement vers le support de bobine (1), dans lequel les enroulements sont introduits dans les rainures (3), du fait que les rotations du dispositif de rotation (4) pour adapter un angle de rotation du support de bobine autour d'un axe de rotation (11) prédéfini et les déplacements de la buse de guidage de fil (7) le long d'un trajet de déplacement (19) pour guider le fil à bobiner (2) à travers respectivement une rainure (3) sont effectués tour à tour à plusieurs reprises, dans lequel des données de géométrie concernant la géométrie de la rainure (3) sont acquises avant et/ou pendant le déplacement de la buse de guidage de fil (7) le long de la rainure (3) respective par un dispositif d'acquisition (9),
**caractérisé en ce**
**que** le trajet de déplacement (19) est déterminé en fonction des données de géométrie par une régulation et/ou **en ce que** l'angle de rotation est déterminé par une régulation de la rotation du dispositif de rotation (4) en fonction des données de géométrie, dans lequel respectivement l'écart de la buse de guidage de fil par rapport à une paroi ou aux deux parois de la rainure intervient dans la régulation en tant que grandeur d'entrée.

2. Procédé selon la revendication 1,
**caractérisé en ce**
**que** les données de géométrie sont acquises de telle sorte que, pendant le déplacement de la buse de guidage de fil (7) à travers la rainure (3) respective, des données partielles de géométrie, qui concernent respectivement un segment (25) de la rainure (3) que la buse de guidage de fil (7) traversera à l'avenir, sont acquises à plusieurs reprises.

3. Procédé selon la revendication 1 ou 2,
**caractérisé en ce**
**que** les données de géométrie de la rainure (3) respective sont acquises ou une partie des données de géométrie de la rainure (3) respective est acquise, pendant que la buse de guidage de fil (7) est guidée à travers une autre rainure du support de bobine (1) et/ou pendant que l'angle de rotation du support de bobine (1) est adapté par une rotation du dispositif de rotation (4).

4. Procédé selon l'une quelconque des revendications précédentes,
**caractérisé en ce**
**que** le dispositif d'acquisition (9) ou un segment d'acquisition du dispositif d'acquisition (9) est guidé pendant le déplacement de la buse de guidage de fil (7) le long d'au moins un segment du trajet de déplacement (19) parallèlement à la buse de guidage de fil (7), afin d'acquérir les données de géométrie de la rainure (3) ou d'une autre rainure.

5. Procédé selon la revendication 4,
**caractérisé en ce**
**que** le dispositif d'acquisition (7) ou le segment d'acquisition est retenu de manière fixe par rapport à la buse de guidage de fil (7).

6. Procédé selon la revendication 1,
**caractérisé en ce**
**que** les données de géométrie sont acquises avant que le support de bobine (1) ne soit retenu sur le dispositif de rotation (4).

7. Procédé selon l'une quelconque des revendications précédentes,
**caractérisé en ce**
**que** des données de position concernant la position d'au moins un fil à bobiner (2) précédemment introduit dans la rainure (3) sont acquises avant et/ou pendant le déplacement de la buse de guidage de fil (7) le long de la rainure (3) respective par le dispositif d'acquisition (9), selon lesquelles le trajet de déplacement (19) est déterminé et/ou modifié en fonction des données de position et/ou selon lesquelles l'angle de rotation est modifié par rotation du dispositif de rotation (4) en fonction des données de position.

8. Procédé selon l'une quelconque des revendications précédentes,
**caractérisé en ce**
**qu'**un capteur optique et/ou tactile est utilisé comme dispositif d'acquisition (9) ou comme partie du dispositif d'acquisition (9).

9. Dispositif d'enroulement destiné à enrouler un support de bobine (1) avec un dispositif de rotation (4) pour amener en rotation le support de bobine (1) autour d'un axe de rotation (11) prédéfini, une buse de guidage de fil (7) pour guider un fil à bobiner vers le support de bobine, au moins un actionneur (8) pour déplacer la buse de guidage de fil (7) et un dispositif de commande (10) pour commander l'actionneur (8) et le dispositif de rotation (4),
**caractérisé en ce**
**que** le dispositif de commande (10) est conçu pour commander le dispositif de rotation (4) et l'actionneur (8) pour l'enroulement du support de bobine (1) selon un procédé selon l'une quelconque des revendications précédentes.

10. Dispositif d'enroulement selon la revendication 9,
**caractérisé en ce**
**qu'**il comprend un dispositif d'acquisition (9) destiné à acquérir les données de géométrie et/ou les données de position.

11. Dispositif d'enroulement selon la revendication 10,
**caractérisé en ce**
**que** le dispositif d'acquisition (9) ou un composant d'acquisition du dispositif d'acquisition (9) est disposé de manière fixe par rapport à la buse de guidage de fil (7).

12. Dispositif d'enroulement selon la revendication 10 ou 11,
**caractérisé en ce**
**qu'**un capteur optique et/ou un tactile est utilisé comme dispositif d'acquisition (9) ou comme partie du dispositif d'acquisition (9).
